Europäisches Patentamt

European Patent Office

Office européen des brevets

(19)

(11) Veröffentlichungsnummer: **0 378 803 B1**

(12) # EUROPÄISCHE PATENTSCHRIFT

(45) Veröffentlichungstag der Patentschrift: **09.06.93**

(51) Int. Cl.5: **C01B 25/00**

(21) Anmeldenummer: **89122800.9**

(22) Anmeldetag: **11.12.89**

(54) **Stabilisierter roter Phosphor sowie Verfahren zu seiner Herstellung.**

(30) Priorität: **14.01.89 DE 3900965**

(43) Veröffentlichungstag der Anmeldung:
**25.07.90 Patentblatt 90/30**

(45) Bekanntmachung des Hinweises auf die
Patenterteilung:
**09.06.93 Patentblatt 93/23**

(84) Benannte Vertragsstaaten:
**BE CH FR GB IT LI NL SE**

(56) Entgegenhaltungen:
**EP-A- 0 283 759**
**US-A- 2 635 953**

(73) Patentinhaber: **HOECHST AKTIENGESELL-
SCHAFT**
**Postfach 80 03 20**
**W-6230 Frankfurt am Main 80(DE)**

(72) Erfinder: **Staendeke, Horst, Dr.**
**Alte Honrather Strasse 22**
**W-5204 Lohmar(DE)**
Erfinder: **Thümmler, Ursus, Dr.**
**Am Kapellenbusch 27**
**W-5042 Erftstadt(DE)**

## Beschreibung

Die Erfindung betrifft stabilisierten, pulverförmigen roten Phosphor aus Phosphorteilchen mit einer Teilchengröße von höchstens 2 mm, wobei die Oberfläche der Phosphorteilchen mit einer dünnen Schicht eines Oxidationsstabilisators bedeckt ist, sowie ein Verfahren zur Herstellung des erfindungsgemäßen Produktes.

Roter Phosphor wird bekanntlich erhalten durch thermische Umwandlung des gelben Phosphors in die stabilere rote Modifikation. Der rohe rote Phosphor mit einem Gehalt von etwa 0,5 - 1,5 Masse% gelbem Phosphor bildet nach Beendigung der Reaktion eine kompakte Masse. Er wird unter Inertgasatmosphäre vermahlen und in wäßriger Suspension durch Kochen mit verdünnter Natronlauge vom gelben Phosphor befreit. Neuerdings wird die Umwandlung in rotierenden Reaktoren vorgenommen, wobei der rote Phosphor als Pulver anfällt. Die aus dem Reaktor entnommene wäßrige Suspension von rotem Phosphor wird in Rührgefäßen mit Dampf aufgeheizt und durch portionsweise Zugabe von Natronlauge vom Restanteil von etwa 0,1 Masse% gelbem Phosphor befreit.

Roter Phosphor wird in der Pyrotechnik sowie bei der Herstellung von Zündholzreibflächen benötigt und findet Anwendung als Flammschutzmittel für Kunststoffe wie z.B. Polyamide oder Polyurethane.

Bekanntlich findet in feuchter Atmosphäre an der Oberfläche von rotem Phosphor eine chemische Reaktion statt, bei der durch Oxidation und Disproportionierung verschiedene Säuren des Phosphors der Oxidationsstufen +1 bis +5 und Phosphorwasserstoff gebildet werden.

Es bestand somit die Aufgabe, die unzureichende Oxidationsstabilität des roten Phosphors durch Stabilisierung zu verbessern.

Hierbei wird unter dem Begriff Stabilisierung eine Maßnahme verstanden, die dem roten Phosphor einen besseren Schutz gegen atmosphärische Einflüsse verleiht und so z.B. bei der Lagerung oder der weiteren Verarbeitung zu einer geringeren Bildung von Oxosäuren des Phosphors und von Phosphorwasserstoff beiträgt.

Zur Stabilisierung des roten Phosphors wurde bereits Aluminiumhydroxid vorgeschlagen (Gmelins Handbuch der anorganischen Chemie, 8. Auflage, 1964, Band Phosphor, Teil B, Seite 83, Verlag Chemie, Weinheim/Bergstrasse). Letzteres wird durch aufeinanderfolgenden Zusatz von auf 55 - 6o°C erwärmten wäßrigen 10 %igen Lösungen von Natriumhydrogencarbonat und Aluminiumsulfat auf den Phosphorteilchen ausgefällt. Die wäßrige Suspension wird dann filtriert und der Filterrückstand getrocknet. Diese Verfahrensweise besitzt den Nachteil, daß zur Erzielung eines ausreichenden Stabilisierungseffektes unerwünscht große Mengen Aluminiumhydroxid angewandt werden müssen, so daß der Phosphor im Hinblick auf seine weitere Verwendung in den verschiedensten Anwendungsgebieten in einem nicht tolerierbaren Maße verunreinigt wird.

Ein anderes Verfahren zur Stabilisierung von rotem Phosphor (US-A-2 359 243) sieht vor, den roten Phosphor in einer wäßrigen 0,04 normalen Lösung von Natriumaluminat zu suspendieren, wonach 1o Stunden Luft bei 85 - 9o°C durch die Suspension geleitet, filtriert, mit heißem Wasser gewaschen und im Vakuum getrocknet wird.

Weiterhin ist es aus der US-Patentschrift 2 635 953 bekannt, zur Stabilisierung von rotem Phosphor außer Aluminiumhydroxid auch Zink- oder Magnesiumhydroxid zu verwenden.

Ferner schlägt die DE-A-28 13 151 (= US-A-4,210,630) vor, zur Stabilisierung von rotem Phosphor ein Gemisch aus Aluminiumhydroxid und Bleihydroxid zu verwenden.

Schließlich beschreibt die EP 0 283 759 A1 einen stabilisierten, pulverförmigen roten Phosphor aus Phosphorteilchen mit einer Teilchengröße von höchstens 2 mm, wobei die Oberfläche der Phosphorteilchen mit einer dünnen Schicht eines Oxidationsstabilisators bedeckt ist, der aus einem in Wasser schwer- oder unlöslichen Metallhydroxid und aus einem Polykondensationsprodukt aus Melamin und Formaldehyd besteht. Als Metallhydroxide werden solche des Al, Si, Ti, Cr, Mn, Zn, Ge, Zr, Nb, Cd, Sn, Pb, Bi und/oder Ce aufgezählt.

Die bisher genannten Verfahren sind nicht geeignet, mit einem Minimum an Stabilisator ein befriedigendes Ausmaß an Stabilisierung des roten Phosphors gegen Oxidation zu gewährleisten. Diese bekannten Oxidationsstabilisatoren besitzen nämlich den Nachteil, daß sie nicht ausreichend thermostabil sind, weil sie bei höheren Temperaturen Wasser abspalten. Bei der Extruderverarbeitung von Kunststoffen, die roten Phosphor als Flammschutzmittel enthalten, wobei der rote Phosphor seinerseits einen Oxidationsstabilisator enthält, ist es jedoch unerläßlich, daß der Oxidationsstabilisator thermostabil ist und selbst bei Temperaturen von über 300°C kein Wasser abspaltet und sich nicht zersetzt.

Überraschenderweise wurde nun gefunden, daß die Oxidationsstabilität des roten Phosphors durch Auffällen von Zinnoxidhydrat sehr wirkungsvoll verbessert werden kann. Dies ist deshalb überraschend und nicht vorhersehbar, weil die bekannten Stabilisatoren Aluminiumhydroxid und Zinkhydroxid auch bei hohen Konzentrationen vergleichsweise unwirksam sind (siehe Tabelle 1).

Gegenstand der Erfindung ist nunmehr stabilisierter, pulverförmiger roter Phosphor aus Phosphorteilchen mit einer Teilchengröße von höchstens 2 mm, wobei die Oberfläche der Phosphorteilchen mit einer dünnen Schicht eines Oxidationsstabilisators bedeckt ist, der aus Zinnoxidhydrat, vorzugsweise überwiegend aus Zinn(II)-oxidhydrat, besteht, dessen Menge 4 - 10 Masse%, bezogen auf die Menge des roten Phosphors, beträgt.

Das Verfahren zur Herstellung des stabilisierten, pulverförmigen roten Phosphors besteht erfindungsgemäß darin, daß man in eine wäßrige Suspension des roten Phosphors eine wasserlösliche Zinnverbindung einträgt, einen pH-Wert von 6 - 8 einstellt, während 0,5 - 3 Stunden bei einer Temperatur von 4o - 8o°C rührt und schließlich die Phosphorteilchen nach Filtration bei erhöhter Temperatur trocknet.

Vorteilhafterweise sollte die abschließende Trocknung bei Temperaturen von 8o - 12o°C im Stickstoffstrom durchgeführt werden.

Die nachfolgenden Ausführungsbeispiele und Tabellen dienen der näheren Erläuterung der Erfindung. Die Prozentangaben sind Masse%.

Bestimmung der Oxidationsstabilität

Die Bestimmung der Oxidationsstabilität wurde nach einem Feucht/Warm-Lagerungstest durchgeführt.

Hierzu wurden 5,o g roter Phosphor (Teilchengröße: 100 % kleiner 150 $\mu$m) in eine Kristallisierschale mit einem Durchmesser von 5o mm eingewogen und die Schale in einem geschlossenen Glasgefäß 168 Stunden bei 65°C bzw. 8o°C und 1oo % relativer Luftfeuchtigkeit gelagert. Der hierbei gebildete Phosphorwasserstoff wurde entweder durch einen Luftstrom (1o l/h) aus einem Glasgefäß ausgetrieben, in einer Gaswaschflasche mit 2,5 masse%iger Quecksilber(II)-chloridlösung zur Reaktion gebracht und die Menge der dabei entstandenen Salzsäure titrimetrisch bestimmt oder mit Hilfe eines DRÄGER-Röhrchens "Phosphorwasserstoff 50/a" erfaßt.

Zur Bestimmung des Gehaltes an den verschiedenen Oxosäuren des Phosphors wurde die Phosphorprobe in ein 25o ml-Becherglas übergeführt, mit 2oo ml 1%iger Salzsäure versetzt, 1o Minuten zum Sieden erhitzt und anschließend filtriert. Im Filtrat erfolgte dann die Bestimmung des säurelöslichen Phosphors nach der photometrischen Molybdato-Vanadato-Phosphorsäure-Methode.

Zur Bestimmung des Ausgangswertes an säurelöslichem Phosphor wird der rote Phosphor dem gleichen Analysenverfahren ohne vorausgegangene Feucht/Warm-Lagerung unterzogen. Dieser Wert wird dann bei der Ermittlung des Gehaltes an säurelöslichem Phosphor nach der Feucht/Warm-Lagerung in Abzug gebracht.

Beispiel 1 (Vergleichsbeispiel)

5oo ml einer wäßrigen Phosphorsuspension mit einem Gehalt von 25o g rotem Phosphor (Teilchengröße: 100 % kleiner 150 $\mu$m) wurden in einem 2 l-Rührreaktor aus Glas mit 25o ml Wasser verdünnt und auf 6o°C erwärmt. Dann wurden 6 g Aluminiumhydroxid in 2o ml 5o %iger Natronlauge gelöst und der PHOSPHOR ROT-Suspension zugesetzt. Durch Zugabe von 5 %iger Schwefelsäure wurde ein pH-Wert von 7 eingestellt; die Suspension wurde anschließend 1 Stunde bei 6o°C gerührt.

Nach der Filtration wurde der Filterrückstand mit Wasser gewaschen und bei 1oo°C im Stickstoffstrom getrocknet. Bei der Analyse wurde ein Aluminiumhydroxidgehalt von 2,5 % ermittelt. Die Werte für die Oxidationsstabilität sind in Tabelle 1 aufgeführt.

Beispiel 2 (Vergleichsbeispiel)

Es wurde analog Beispiel 1 gearbeitet, wobei jedoch 12 g Aluminiumhydroxid eingesetzt wurden. Bei der Analyse wurde ein Aluminiumhydroxidgehalt von 4,7 % ermittelt.
Die Werte für die Oxidationsstabilität sind in Tabelle 1 aufgeführt.

Beispiel 3 (Vergleichsbeispiel)

Es wurde analog Beispiel 1 gearbeitet, wobei jedoch 18 g Aluminiumhydroxid eingesetzt wurden. Bei der Analyse wurde ein Aluminiumhydroxidgehalt von 6,9 % ermittelt.
Die Werte für die Oxidationsstabilität sind in Tabelle 1 aufgeführt.

Beispiel 4 (Vergleichsbeispiel)

Es wurde analog Beispiel 1 gearbeitet, wobei jedoch 25 g Aluminiumhydroxid eingesetzt wurden. Bei der Analyse wurde ein Aluminiumhydroxidgehalt von 9,5 % ermittelt.
Die Werte für die Oxidationsstabilität sind in Tabelle 1 aufgeführt.

Beispiel 5 (Vergleichsbeispiel)

Es wurde analog Beispiel 1 gearbeitet, wobei jedoch 6 g Zinkoxid eingesetzt wurden. Bei der Analyse wurde ein Zinkhydroxidgehalt von 2,9 % ermittelt.
Die Werte für die Oxidationsstabilität sind in Tabelle 1 aufgeführt.

Beispiel 6 (Vergleichsbeispiel)

Es wurde analog Beispiel 1 gearbeitet, wobei jedoch 12,5 g Zinkoxid eingesetzt wurden. Bei der Analyse wurde ein Zinkhydroxidgehalt von 6,3 % ermittelt.
Die Werte für die Oxidationsstabilität sind in Tabelle 1 aufgeführt.

Beispiel 7 (Vergleichsbeispiel)

Es wurde analog Beispiel 1 gearbeitet, wobei jedoch 19 g Zinkoxid eingesetzt wurden. Bei der Analyse wurde ein Zinkhydroxidgehalt von 9,3 % ermittelt.
Die Werte für die Oxidationsstabilität sind in Tabelle 1 aufgeführt.

Beispiel 8 (Vergleichsbeispiel)

Es wurde analog Beispiel 1 gearbeitet, wobei jedoch 25 g Zinkoxid eingesetzt wurden. Bei der Analyse wurde ein Zinkhydroxidgehalt von 11,3 % ermittelt.
Die Werte für die Oxidationsstabilität sind in Tabelle 1 aufgeführt.

Beispiel 9 (erfindungsgemäß)

Es wurde analog Beispiel 1 gearbeitet, wobei jedoch 3,7 g Zinn(II)-chlorid, $SnCl_2 \cdot 2H_2O$, eingesetzt wurden. Bei der Analyse wurde ein Zinnoxidhydratgehalt von 0,9 % (berechnet als SnO) ermittelt.
Die Werte für die Oxidationsstabilität sind in Tabelle 1 aufgeführt.

Beispiel 1o (erfindungsgemäß)

Es wurde analog Beispiel 1 gearbeitet, wobei jedoch 7,4 g Zinn(II)-chlorid eingesetzt wurden. Bei der Analyse wurde ein Zinnoxidhydratgehalt von 1,7 % (berechnet als SnO) ermittelt. Die Werte für die Oxidationsstabilität sind in Tabelle 1 aufgeführt.

Beispiel 11 (erfindungsgemäß)

Es wurde analog Beispiel 1 gearbeitet, wobei jedoch 11 g Zinn(II)-chlorid eingesetzt wurden. Bei der Analyse wurde ein Zinnoxidhydratgehalt von 2,5 % (berechnet als SnO) ermittelt. Die Werte für die Oxidationsstabilität sind in Tabelle 1 aufgeführt.

Beispiel 12 (erfindungsgemäß)

Es wurde analog Beispiel 1 gearbeitet, wobei jedoch 15 g Zinn(II)-chlorid eingesetzt wurden. Bei der Analyse wurde ein Zinnoxidhydratgehalt von 3,3 % (berechnet als SnO) ermittelt. Die Werte für die Oxidationsstabilität sind in Tabelle 1 aufgeführt.

Beispiel 13 (erfindungsgemäß)

Es wurde analog Beispiel 1 gearbeitet, wobei jedoch 21 g Zinn(II)-chlorid eingesetzt wurden. Bei der Analyse wurde ein Zinnoxidhydratgehalt von 4,4 % (berechnet als SnO) ermittelt. Die Werte für die

4

Oxidetionsstabilität sind in Tabelle 1 aufgeführt.

Beispiel 14 (erfindungsgemäß)

Es wurde analog Beispiel 1 gearbeitet, wobei jedoch 26 g Zinn(II)-chlorid eingesetzt wurden. Bei der Analyse wurde ein Zinnoxidhydratgehalt von 5,7 % (berechnet als SnO) ermittelt. Die Werte für die Oxidationsstabilität sind in Tabelle 1 aufgeführt.

Beispiel 15 (erfindungsgemäß)

Es wurde analog Beispiel 1 gearbeitet, wobei jedoch 31,5 g Zinn(II)-chlorid eingesetzt wurden. Bei der Analyse wurde ein Zinnoxidhydratgehalt von 6,4 % (berechnet als SnO) ermittelt. Die Werte für die Oxidationsstabilität sind in Tabelle 1 aufgeführt.

Beispiel 16 (erfindungsgemäß)

Es wurde analog Beispiel 1 gearbeitet, wobei jedoch 37 g Zinn(II)-chlorid eingesetzt wurden. Bei der Analyse wurde ein Zinnoxidhydratgehalt von 7,4 % (berechnet als SnO) ermittelt. Die Werte für die Oxidationsstabilität sind in Tabelle 1 aufgeführt.

Beispiel 17 (erfindungsgemäß)

Es wurde analog Beispiel 1 gearbeitet, wobei jedoch 42 g Zinn(II)-chlorid eingesetzt wurden. Bei der Analyse wurde ein Zinnoxidhydratgehalt von 8,5 % (berechnet als SnO) ermittelt. Die Werte für die Oxidationsstabilität sind in Tabelle 1 aufgeführt.

TABELLE 1: Bestimmung der Oxidationsstabilität

| Beispiel | Oxidationsstabilisator | | Feucht/Warm-Lagerungstest | | | |
| --- | --- | --- | --- | --- | --- | --- |
| | | | bei 65°C/100 % rel. Luftfeuchte | | bei 80°C/100 % rel. Luftfeuchte | |
| | Typ | Konzentration (%) | mg $PH_3$/g·Tag | mg P/g·Tag[1] | mg $PH_3$/g·Tag | mg P/g·Tag[1] |
| 1 (Vergleich) | $Al(OH)_3$ | 2,5 | 0,36 | 2,3 | 1,3 | 11,8 |
| 2 (Vergleich) | $Al(OH)_3$ | 4,7 | 0,24 | 2,2 | 0,87 | 8,7 |
| 3 (Vergleich) | $Al(OH)_3$ | 6,9 | 0,22 | 2,8 | 0,95 | 5,5 |
| 4 (Vergleich) | $Al(OH)_3$ | 9,5 | 0,32 | 3,2 | 1,0 | 8,4 |
| 5 (Vergleich) | $Zn(OH)_2$ | 2,9 | 0,21 | 1,3 | 1,1 | 7,0 |
| 6 (Vergleich) | $Zn(OH)_2$ | 6,3 | 0,33 | 1,6 | 1,4 | 6,8 |
| 7 (Vergleich) | $Zn(OH)_2$ | 9,3 | 0,31 | 1,6 | 1,5 | 7,2 |
| 8 (Vergleich) | $Zn(OH)_2$ | 11,3 | 0,30 | 2,0 | 2,0 | 9,3 |
| 9 (Erfindung) | $SnO·H_2O$ [2)] | 0,9 | 1,0 | 7,2 | 1,8 | 13,3 |
| 10 (Erfindung) | $SnO·H_2O$ | 1,7 | 0,30 | 2,3 | 0,82 | 5,4 |
| 11 (Erfindung) | $SnO·H_2O$ | 2,5 | 0,25 | 0,63 | 0,79 | 3,6 |
| 12 (Erfindung) | $SnO·H_2O$ | 3,3 | 0,21 | < 0,05 | 0,55 | 2,6 |
| 13 (Erfindung) | $SnO·H_2O$ | 4,4 | 0,15 | < 0,05 | 0,28 | 0,21 |
| 14 (Erfindung) | $SnO·H_2O$ | 5,7 | 0,15 | < 0,05 | 0,25 | 0,10 |
| 15 (Erfindung) | $SnO·H_2O$ | 6,4 | 0,14 | < 0,05 | 0,25 | 0,08 |
| 16 (Erfindung) | $SnO·H_2O$ | 7,4 | 0,12 | < 0,05 | 0,25 | < 0,05 |
| 17 (Erfindung) | $SnO·H_2O$ | 8,5 | 0,12 | < 0,05 | 0,22 | < 0,05 |

1) Bestimmt wurde die Zunahme an säurelöslichem Phosphor

2) Wegen der Schwierigkeit, Zinnoxidhydraten eine eindeutige chemische Formel zuzuordnen, wurde aus dem analytisch ermittelten Zinngehalt ein SnO-Gehalt errechnet.

**Patentansprüche**

1. Stabilisierter, pulverförmiger roter Phosphor aus Phosphorteilchen mit einer Teilchengröße von höchstens 2 mm, wobei die Oberfläche der Phosphorteilchen mit einer dünnen Schicht eines Oxidationssta-

6

bilisators bedeckt ist, dadurch gekennzeichnet, daß der Oxidationsstabilisator aus Zinnoxidhydrat besteht, dessen Menge 4 bis 10 Masse%, bezogen auf die Menge des roten Phosphors, beträgt.

2. Verfahren zur Herstellung des stabilisierten, pulverförmigen roten Phosphors nach Anspruch 1, dadurch gekennzeichnet, daß man in eine wäßrige Suspension des roten Phosphors eine wasserlösliche Zinnverbindung einträgt, einen pH-Wert von 6 - 8 einstellt, während 0,5 - 3 Stunden bei einer Temperatur von 40 bis 80°C rührt und schließlich die Phosphorteilchen nach Filtration bei erhöhter Temperatur trocknet.

3. Verfahren nach Anspruch 2, dadurch gekennzeichnet, daß man die abschließende Trocknung bei Temperaturen von 80 bis 120°C im Stickstoffstrom durchführt.

## Claims

1. Stabilized, pulverulent red phosphorus comprising phosphorus particles having a maximum particle size of 2 mm, the surface of the phosphorus particles being covered with a thin layer of an oxidation stabilizer, which comprises tin oxide hydrate, the quantity of which is 4 to 10% by mass, relative to the quantity of red phosphorus.

2. A process for the preparation of the stabilized, pulverulent red phosphorus as claimed in claim 1, which comprises introducing a water-soluble tin compound into an aqueous suspension of the red phosphorus, adjusting the pH to a value of 6 - 8, stirring for 0.5 - 3 hours at a temperature of 40 to 80°C and, after filtration, finally drying the phosphorus particles at an elevated temperature.

3. The process as claimed in claim 2, wherein the final drying is carried out at temperatures of 80 to 120°C in a stream of nitrogen.

## Revendications

1. Phosphore rouge en poudre stabilisé consistant en particules de phosphore d'une dimension de particules de 2 mm au plus, la surface des particules de phosphore étant recouverte d'une couche mince d'un stabilisant à l'oxydation, caractérisé en ce que le stabilisant à l'oxydation consiste en oxyde d'étain hydraté dont la quantité est de 4-10 % en masse par rapport à la quantité du phosphore rouge.

2. Procédé pour la fabrication du phosphore rouge en poudre stabilisé selon la revendication 1, caractérisé en ce que l'on introduit dans une suspension aqueuse du phosphore rouge un composé d'étain soluble dans l'eau, on ajuste un pH de 6-8, on agite à une température de 40 à 80°C pendant 0,5-3 h et, enfin, on sèche les particules de phosphore à température élevée après filtration.

3. Procédé selon la revendication 2, caractérisé en ce que le séchage final est mis en oeuvre à des températures de 80 à 120°C dans un courant d'azote.